# EUROPÄISCHE PATENTSCHRIFT

(11) **EP 3 142 088 B1**
(45) Veröffentlichungstag und Bekanntmachung des Hinweises auf die Patenterteilung: **08.11.2017**
(21) Anmeldenummer: 15184874.4
(22) Anmeldetag: 11.09.2015
(51) Int. Cl.: G08B 13/181, G05B 19/4061, B25J 9/16, F16P 3/14, G01S 17/87

(54) **VERFAHREN ZUM EINSTELLEN VON MEHREREN TEILBEREICHEN EINES GEWÜNSCHTEN SCHUTZBEREICHS**
METHOD FOR CONFIGURING MULTIPLE SUB-AREAS OF A DESIRED PROTECTION AREA
PROCEDE DE CONFIGURATION DE PLUSIEURS ZONES PARTIELLES D'UNE ZONE DE PROTECTION SOUHAITEE

(43) Veröffentlichungstag der Anmeldung: 15.03.2017
(73) Patentinhaber: SICK AG, 79183 Waldkirch/Breisgau (DE)
(72) Erfinder: ROTHENBERGER, Bernd, 79365 Rheinhausen (DE); RIST, Jonas, 79106 Freiburg (DE); HABERER, Manfred, 79359 Riegel (DE)
(74) Vertreter: Manitz Finsterwald Patentanwälte PartmbB

(56) Entgegenhaltungen:
- DE-A1-102007 053 812
- US-A1- 2012 123 563

## Beschreibung

Die vorliegende Erfindung betrifft ein Verfahren zum Einstellen von mehreren Teilbereichen eines gewünschten Schutzbereiches.

Überwachungseinheiten, wie beispielsweise Laserscanner, werden dazu eingesetzt, sogenannte Schutzbereiche zu überwachen. Bei der Überwachung des Schutzbereiches kann beispielsweise festgestellt werden, ob eine Person den Schutzbereich betritt, woraufhin der Betrieb einer in der Nähe befindlichen Maschine oder eines in der Nähe befindlichen Roboters abgeschaltet werden kann.

Eine Überwachungseinheit kann insbesondere bei ihrer Installation oder auch im Nachhinein so konfiguriert werden, dass ein gewünschter Schutzbereich überwacht wird, welcher insbesondere ein Teil eines maximalen Detektionsbereichs der Überwachungseinheit ist. In dem gesamten Detektionsbereich können gegebenenfalls auch Gegenstände oder Personen detektiert und erkannt werden. Im Unterschied zu im Schutzbereich befindlichen Personen oder Gegenständen löst eine im übrigen Detektionsbereich befindliche Person aber beispielsweise nicht das Abschalten von Maschinen aus.

Ist der abzusichernde Bereich, d.h. der gewünschte Schutzbereich, größer als die Reichweite einer einzelnen Überwachungseinheit, d.h. größer als der Detektionsbereich einer einzelnen Überwachungseinheit, so müssen zwei oder mehr Überwachungseinheiten gemeinsam verwendet und geeignet konfiguriert werden, um den gesamten Schutzbereich abzudecken.

Herkömmlicherweise muss in einem solchen Fall jeder Teilbereich des Schutzbereiches einzeln gezeichnet, d.h. festgelegt werden. Hierzu wird die Konfiguration einer Überwachungseinheit entsprechend geändert. Anschließend wird die Konfiguration der nächsten Überwachungseinheit angepasst. Dieser Vorgang muss für jede Überwachungseinheit wiederholt werden, was für einen Benutzer sehr aufwendig sein kann, da eine Anpassung verschiedener Teilbereiche aneinander mehrere Iterationen von Veränderungen der Teilbereiche erfordern kann. Zudem kann ein physikalischer Zugriff auf die verschiedenen Überwachungseinheiten notwendig sein.

Aus der DE 10 2007 053 812 A1 ist ein Verfahren gemäß dem Oberbegriff des Anspruchs 1 bekannt. Die US 2012/0123563 A1 lehrt die Aufteilung von Überwachungsräumen auf verschiedene Sensoren, wobei die von verschiedenen Sensoren überwachten Bereiche überlappen können.

Es ist die der Erfindung zugrundeliegende Aufgabe, ein Verfahren zur Einstellung von mehreren Teilbereichen eines gewünschten Schutzbereiches anzugeben, welches die Einrichtung eines Schutzbereiches erleichtert und zugleich eine effiziente Überwachung des Schutzbereichs gestattet.

Diese Aufgabe wird erfindungsgemäß durch ein Verfahren mit den Merkmalen des Anspruchs 1 gelöst.

Die Erfindung betrifft ein Verfahren, bei welchem
a) die Positionen einer Mehrzahl von Überwachungseinheiten erfasst werden, wobei jede Überwachungseinheit einen Detektionsbereich erfasst,
b) eine maximale Größe jedes Detektionsbereichs ermittelt wird,
c) der gewünschte Schutzbereich in einer graphischen Benutzeroberfläche (GUI) festgelegt wird,
d) anhand der Positionen der Überwachungseinheiten, der maximalen Größe der Detektionsbereiche und des gewünschten Schutzbereichs die von den jeweiligen Überwachungseinheiten zu überwachenden Teilbereiche von einer Software festgelegt werden und
e) die Teilbereiche den jeweiligen Überwachungseinheiten zugewiesen werden, wobei für Überlappungsbereiche des Schutzbereiches, welche von mehreren Überwachungseinheiten überwachbar sind, die Teilbereiche zumindest teilweise so festgelegt werden, dass jeweils nur genau diejenige Überwachungseinheit den Überlappungsbereich überwacht, die dem jeweiligen Überlappungsbereich am nächsten ist.

Besonders geeignet ist das Verfahren zur Einstellung eines Schutzbereiches, der mit mehreren Laserscannern überwacht werden soll.

Bei dem erfindungsgemäßen Verfahren ist von Vorteil, dass die einzelnen Teilbereiche nicht mehr manuell festgelegt werden müssen, sondern automatisiert bestimmt werden können. Zudem können die so definierten Teilbereiche automatisiert an die jeweiligen Überwachungseinheiten übermittelt werden, wodurch nach der Festlegung des gewünschten Schutzbereiches eine vollautomatische Konfiguration der Überwachungseinheiten erfolgen kann. Das erfindungsgemäße Verfahren kann insbesondere mittels einer einzigen Software durchgeführt werden, wie es weiter unten beschrieben wird.

Die für das erfindungsgemäße Verfahren durchzuführenden Schritte werden im Folgenden näher erläutert.

Zunächst müssen die Positionen der Überwachungseinheiten erfasst werden, d.h. deren relative Positionen zueinander oder deren absolute Positionen im Raum. Unter einer Position kann eine zweidimensionale Position in einer Ebene oder eine dreidimensionale Position in einem Raum verstanden werden. Die Positionen der Überwachungseinheiten können z.B. von den Überwachungseinheiten selbst erfasst werden und beispielsweise an eine das Verfahren durchführende Software übermittelt werden.

Außerdem wird die maximale Größe jedes Detektionsbereichs ermittelt. Der Detektionsbereich kann dem sicheren Bereich der jeweiligen Überwachungseinheit entsprechen.

Zudem ist es erforderlich, dass der gewünschte Schutzbereich ermittelt wird, welcher dazu beispielsweise von einem Benutzer in der graphischen Benutzeroberfläche festgelegt oder eingezeichnet wird. In der graphischen Benutzeroberfläche können zudem die Positionen der Überwachungseinheiten angezeigt werden, wobei die virtuellen Positionen bevorzugt die realen Positionen darstellen.

Sobald die Positionen und Ausrichtungen der Überwachungseinheiten, deren Detektionsbereiche und der gewünschte Schutzbereich bekannt sind, können die Teilbereiche festgelegt werden. Abschließend können die Teilbereiche den jeweiligen Überwachungseinheiten zugewiesen, d.h. insbesondere mittels einer Datenübertragung den Überwachungseinheiten mitgeteilt werden.

Die Erfindung gestattet es somit, die Aufteilung komplexer Schutzbereiche, welche von einer Vielzahl von Überwachungseinheiten überwacht werden, auf einfache Weise und mit geringem Aufwand durchzuführen.

Erfindungsgemäß werden für Überlappungsbereiche des Schutzbereiches, welche von mehreren Überwachungseinheiten überwachbar sind, die Teilbereiche so festgelegt, dass jeweils nur genau diejenige Überwachungseinheit den Überlappungsbereich überwacht, die dem jeweiligen Überlappungsbereich am nächsten ist, d.h. den geringsten Abstand zu dem Überlappungsbereich aufweist. Mittels einer derartigen Festlegung kann jeweils eindeutig definiert werden, welche Überwachungseinheit für welche Punkte des Schutzbereiches zuständig ist. Konflikte bei der Festlegung der Teilbereiche können somit vermieden werden. Der Abstand der Überwachungseinheit zu dem jeweiligen Überlappungsbereich kann beispielsweise zu dem Schwerpunkt der Fläche des Überlappungsbereichs bestimmt werden.

Vorteilhafte Weiterbildungen der Erfindung sind der Beschreibung, den Unteransprüchen sowie den Zeichnungen zu entnehmen.

Gemäß einer ersten vorteilhaften Ausführungsform wird auch die Ausrichtung der Überwachungseinheiten erfasst. Dies bedeutet, dass die Richtung bzw. gerichtete Anordnung der Überwachungseinheiten festgestellt wird. Die Ausrichtung der Überwachungseinheiten kann ebenfalls bei der Festlegung der Teilbereiche berücksichtigt werden, insbesondere wenn die Überwachungseinheiten keinen Detektionsbereich aufweisen, der sich gleichförmig um 360° um die Überwachungseinheit herum erstreckt.

Außerdem ist eine Feststellung der Ausrichtung dann wichtig, wenn ansonsten die 0°-Position der Überwachungseinheit nicht bekannt ist, also sich nicht z.B. aufgrund des Aufbaus bereits aus der alleinigen Kenntnis der Position der Überwachungseinheit ergibt.

Bevorzugt werden für Überlappungsbereiche des Schutzbereiches, welche von mehreren Überwachungseinheiten überwachbar sind, die Teilbereiches zumindest teilweise so festgelegt, dass jeweils nur genau eine Überwachungseinheit den jeweiligen Überlappungsbereich überwacht. Für jeden Punkt des gewünschten Schutzbereiches kann somit eine eindeutige Zuordnung getroffen werden, welche der Überwachungseinheiten den jeweiligen Punkt überwacht.

Alternativ oder zusätzlich können auch Bereiche des gewünschten Schutzbereiches festgelegt werden, die von mehreren Überwachungseinheiten gleichzeitig überwacht werden sollen. Insbesondere kann für solche Bereiche auch festgelegt werden, wie viele Überwachungseinheiten den jeweiligen Bereich überwachen bzw. abtasten sollen.

Weiter alternativ oder zusätzlich können für Grenzen zwischen zwei Teilbereichen Grenzbereiche mit einer vorbestimmten Breite festgelegt werden, die jeweils beiden Teilbereichen zugeordnet werden und demnach von jeweils zumindest zwei Überwachungseinheiten überwacht werden. Auf diese Weise kann sichergestellt werden, dass an den Grenzen zwischen den Teilbereichen keine Bereiche entstehen, die i nicht überwacht werden. Die Breite eines solchen Grenzbereichs kann beispielsweise 30 oder 60 cm sein, so dass der Grenzbereich sich beiderseits der Grenze jeweils 15 oder 30 cm weit erstreckt. Außerhalb des Grenzbereichs kann der Überlappungsbereich z.B. jeweils nur von einer Überwachungseinheit überwacht werden.

Alternativ zur erfindungsgemäßen Lehre werden für Überlappungsbereiche des Schutzbereiches, welche von mehreren Überwachungseinheiten überwachbar sind, die Teilbereiche so festgelegt, dass jeweils nur genau diejenige Überwachungseinheit den Überlappungsbereich überwacht, die bezüglich der Größe ihres Detektionsbereichs dem jeweiligen Überlappungsbereich am nächsten ist. Dies bedeutet, dass Überwachungseinheiten mit einem sehr großen Detektionsbereich auch für die Überwachung von Überlappungsbereichen eingesetzt werden können, welche einer anderen Überwachungseinheit näher liegen. So wird erreicht, dass die Überlappungsbereiche jeweils von Überwachungseinheiten überwacht werden, deren Detektionsbereiche sich über den Überlappungsbereich hinaus erstrecken. Eine Detektion von Objekten am Rand des jeweiligen Detektionsbereichs ist dann nicht notwendig, wodurch die Genauigkeit und Zuverlässigkeit der Detektion von Objekten oder Personen erhöht werden kann.

Insbesondere kann bei einem Überlappungsbereich der im Detektionsbereich zweier Laserscanner liegt, derjenige Laserscanner den Überlappungsbereich überwachen, der dem Überlappungsbereich prozentual bezüglich seiner Reichweite am nächsten ist. Beispielsweise wird für einen ersten Scanner, der eine Reichweite von 4 m aufweist und einen kreisförmigen Detektionsbereich mit Radius 4 m besitzt und einen zweiten Scanner, der eine Reichweite von 15 m aufweist, ein Überlappungsbereich, der von beiden Scannern 3 m entfernt ist, dem zweiten Scanner zugewiesen.

Alternativ kann auch für jeden Punkt des Schutzbereiches ermittelt werden, mit welcher Genauigkeit die Überwachungseinheiten einen jeweiligen Punkt erfassen bzw. abtasten können, wobei dann diejenige Überwachungseinheit für einen jeweiligen Punkt oder ein jeweiliger Teilbereich ausgewählt wird, welche dort die höchste Genauigkeit aufweist.

Besonders bevorzugt werden die Überwachungseinheiten eingestellt, nur den jeweils zugewiesenen Teilbereich zu überwachen. Beispielsweise kann ein Laserscanner so konfiguriert werden, dass er nur Laserimpulse in den ihm zugewiesenen Teilbereich aussendet. Auf diese Weise können Überschneidungen mit anderen Überwachungseinheiten vermieden werden, wodurch beispielsweise Fremdlichteinflüsse reduzierbar sind. Alternativ oder zusätzlich können die Überwachungseinheiten derart eingestellt werden, dass lediglich von dem jeweiligen Teilbereich stammende Informationen aus dem Schutzbereich verarbeitet werden. Die von den Überwachungseinheiten zu verarbeitende Datenmenge kann hierdurch gesenkt werden. Auch kann z.B. eine Scan-Rate der Überwachungseinheiten erhöht werden, wenn nur ein - im Vergleich zu dem gesamten Detektionsbereich - kleinerer Teilbereich überwacht werden muss.

Gemäß einer weiteren vorteilhaften Ausführungsform umfasst der gewünschte Schutzbereich mehrere voneinander getrennte Schutzbereichsabschnitte. Der gewünschte Schutzbereich kann also in mehrere Teile aufgeteilt sein, die sich beispielsweise links und rechts eines Korridors erstrecken.

Gemäß einer weiteren vorteilhaften Ausführungsform erfolgt eine Ausgabe nicht-überwachbarer Bereiche des gewünschten Schutzbereiches. Es kann also eine Warnung ausgegeben werden, welche darauf hinweist, dass der gewünschte Schutzbereich nicht vollständig mit den vorhandenen Überwachungseinheiten abgedeckt werden kann. Diese Warnung kann von einer Software zur Eingabe des gewünschten Schutzbereiches und/oder von den Überwachungseinheiten selbst ausgegeben werden.

Der gewünschte Schutzbereich kann nicht-zu-überwachende Bereiche innerhalb des Schutzbereiches aufweisen. Bei den nicht-zu-überwachenden Bereichen kann es sich um sogenannte Cut-Out-Bereiche handeln, die nicht überwacht werden müssen oder sollen. Ein Cut-Out-Bereich kann beispielsweise ein Gang oder Korridor für Personen sein, in welchen der Aufenthalt von Personen gestattet ist.

Die Überwachungseinheiten können mit der Festlegung der Teilbereiche derart eingestellt werden, dass die Cut-Out-Bereiche überhaupt nicht überwacht oder zumindest kein Warnsignal ausgegeben wird, sofern eine Person oder ein Gegenstand in dem Cut-Out-Bereich erfasst wird. Andererseits können von den Überwachungseinheiten erfasste Informationen, die aus den Cut-Out-Bereichen stammen, vor deren Verarbeitung z.B. verworfen werden.

Weiter bevorzugt werden auch Konturbereiche innerhalb des gewünschten Schutzbereichs ermittelt und bei der Festlegung der Teilbereiche berücksichtigt. Konturbereiche sind Bereiche, in welchen permanent von den Überwachungseinheiten eine bestimmte Kontur, z.B. eine Säule und dergleichen, erfasst wird. Innerhalb der Kontur braucht dann keine Erfassung bzw. Überwachung stattzufinden, was bei der Festlegung der Teilbereiche berücksichtigt werden kann.

Außerdem kann bei vorhandenen Konturbereichen berücksichtigt werden, dass Bereiche im Umfeld z.B. einer Säule nicht von jeder Überwachungseinheit überwacht werden können, da diese Bereiche bezüglich der jeweiligen Überwachungseinheit hinter der Säule liegen können. Solche "Schattenbereiche" können dann für die Überwachung mit anderen Überwachungseinheiten vorgesehen werden, d.h. den Teilbereichen anderer Überwachungseinheiten zugeordnet werden.

Besonders bevorzugt sind die festgelegten Teilbereiche und/oder der gewünschte Schutzbereich mittels einer Software anzeigbar und/oder veränderbar. Die Software kann die Teilbereiche und/oder den Schutzbereich mittels der graphischen Benutzeroberfläche anzeigen und es zusätzlich gestatten, die Teilbereiche und/oder den Schutzbereich in der graphischen Benutzeroberfläche zu verändern. Beispielsweise können Teilbereiche und/oder der Schutzbereich per "Drag and Drop" angepasst werden.

Die Feststellung der Position und Ausrichtung der Überwachungseinheiten kann z.B. automatisch erfolgen und/oder sich zumindest teilweise aus den geometrischen und baulichen Gegebenheiten ergeben. Alternativ kann die Erfassung der Position auch manuell erfolgen. Dazu können z.B. auf der graphischen Benutzeroberfläche die Messdaten der einzelnen Überwachungseinheiten eingeblendet werden und ein Benutzer kann die virtuellen Positionen der Überwachungseinheiten auf der graphischen Benutzeroberfläche verschieben bzw. verdrehen, bis deren Messdaten übereinstimmen.

Gemäß einer Weiterbildung werden die Positionen und Ausrichtungen der Überwachungseinheiten mittels eines Referenzobjekts ermittelt. Die Dimensionen und gegebenenfalls die Ausrichtung des Referenzobjekts können hierfür bekannt sein, wobei die Überwachungseinheiten anhand des Abstandes oder der relativen Größe des Referenzobjekts und anhand dessen Ausrichtung ihre Relativposition zu dem Referenzobjekt ermitteln können. Die so ermittelten Positionen und Ausrichtungen können einer Konfigurationssoftware bevorzugt automatisiert übermittelt werden.

Bevorzugt werden sämtliche Verfahrensschritte von einer einzigen Software ausgeführt, wodurch die Einrichtung von Schutzbereichen, welche mittels einer Vielzahl von Überwachungseinheiten überwacht werden, auf besonders einfache Weise erfolgen kann. Die Software kann bevorzugt alle Verfahrensschritte durchführen oder zumindest überwachen, d.h. insbesondere die Positionen und Ausrichtungen der Überwachungseinheiten feststellen, die Teilbereiche festlegen und die Überwachungseinheiten entsprechend der festgelegten Teilbereiche konfigurieren.

Gemäß einer weiteren vorteilhaften Ausführungsform hinterlegt die Software den angezeigten Teilbereichen und/oder dem gewünschten Schutzbereich einen Lageplan. Durch den Lageplan können beispielsweise Gegebenheiten eines Gebäudes und dergleichen besser berücksichtigt werden. Eine solche Hinterlegung eines Lageplans kann es auch erleichtern, den Schutzbereich an bestehende Wände, Türen, Gänge usw. anzupassen.

Wie erwähnt kann es sich bei den Überwachungseinheiten um Laserscanner handeln. Ein Laserscanner erfasst die räumliche Struktur seiner Umgebung in Form eines Abstandsprofils einer oder mehreren festgelegten Ebenen. Dazu wird z.B. ein Sendestrahl mittels eines Drehspiegels über einen Winkelbereich von bis zu 360° abgelenkt, um die Ebene oder die Ebenen in diskreten Winkelschritten abzutasten. Zu jedem Winkel wird ein kurzer Lichtpuls ausgesandt und die Lichtlaufzeit bis zum Empfang des aus dem Detektionsbereich von einem Objekt reflektierten oder remittierten Sendestrahls gemessen, die dann über die Lichtgeschwindigkeit in eine Entfernungsinformation umgerechnet wird (TOF - (Time Of Flight -) Verfahren). Ein alternatives Verfahren zur Lichtlaufzeitbestimmung ist die Messung der Phasenverschiebung zwischen amplitudenmoduliertem Sendelicht und Empfangslicht.

Die Schutzbereiche können zweidimensionale Schutzfelder sein, wobei dann die Teilbereiche eines solchen zweidimensionalen Schutzfeldes zweidimensionale Teilfelder sind. Grundätzlich kann es sich bei den Schutzbereichen aber auch um dreidimensionale Schutzbereiche und insofern um dreidimensionale Teilbereiche handeln, wenn die Überwachungseinheiten zur Überwachung eines dreidimensionalen Raums ausgestaltet sind. Dies kann z.B. mit Überwachungseinheiten, z.B. mit Laserscannern, erreicht werden, die derart eingerichtet sind, dass sie mehrere sich um einen Winkel im Raum unterscheidende Ebenen überwachen, oder dadurch, dass mehrere zweidimensionale Überwachungseinheiten, z.B. Laserscanner, derart miteinander kombiniert werden, dass sie jeweils unterschiedliche Ebenen des Überwachungsraumes überwachen. Für eine solche Anwendung kann die graphische Benutzeroberfläche derart ausgestaltet sein, dass sie z.B. unterschiedliche Schnittebenen des dreidimensionalen Schutzbereiches darstellen kann oder dass der Schutzbereich perspektivisch dargestellt wird.

Weiterhin betrifft die Erfindung ein System umfassend eine Recheneinrichtung und zumindest zwei Überwachungseinheiten, wobei die Recheneinrichtung und die Überwachungseinheiten mittels einer Datenverbindung gekoppelt sind. Das System ist ausgebildet, das vorstehend erläuterte Verfahren durchzuführen.

Zudem betrifft die Erfindung ein Computerprogramm mit Programmcode-Mitteln, die derart eingerichtet sind, dass ein Verfahren der vorstehend erläuterten Art durchgeführt wird, wenn das Programm auf einem Computer ausgeführt wird.

Ferner betrifft die Erfindung ein Computerprogrammprodukt mit Programmcode-Mitteln, die auf einem computerlesbaren Datenträger gespeichert sind und derart eingerichtet sind, dass ein Verfahren der voranstehend erläuterten Art durchgeführt wird, wenn das Programmprodukt auf einem Computer ausgeführt wird.

Zu dem erfindungsgemäßen System, dem erfindungsgemäßen Computerprogramm und dem erfindungsgemäßen Computerprogrammprodukt gelten die bezüglich des erfindungsgemäßen Verfahrens getroffenen Aussagen entsprechend, insbesondere hinsichtlich Vorteilen und bevorzugten Ausführungsformen.

Nachfolgend wird die Erfindung rein beispielhaft unter Bezugnahme auf die Zeichnungen beschrieben. Es zeigen:
- Fig. 1: ein erfindungsgemäßes System in schematischer Ansicht; und
- Fig. 2: eine graphische Benutzeroberfläche zur Festlegung eines gewünschten Schutzfeldes.

Das im Folgenden erläuterte Beispiel betrifft ein Verfahren zum Einstellen von mehreren zweidimensionalen Teilfeldern eines gewünschten zweidimensionalen Schutzfeldes 38 zur Überwachung mit Laserscannern 14, 16, 18.

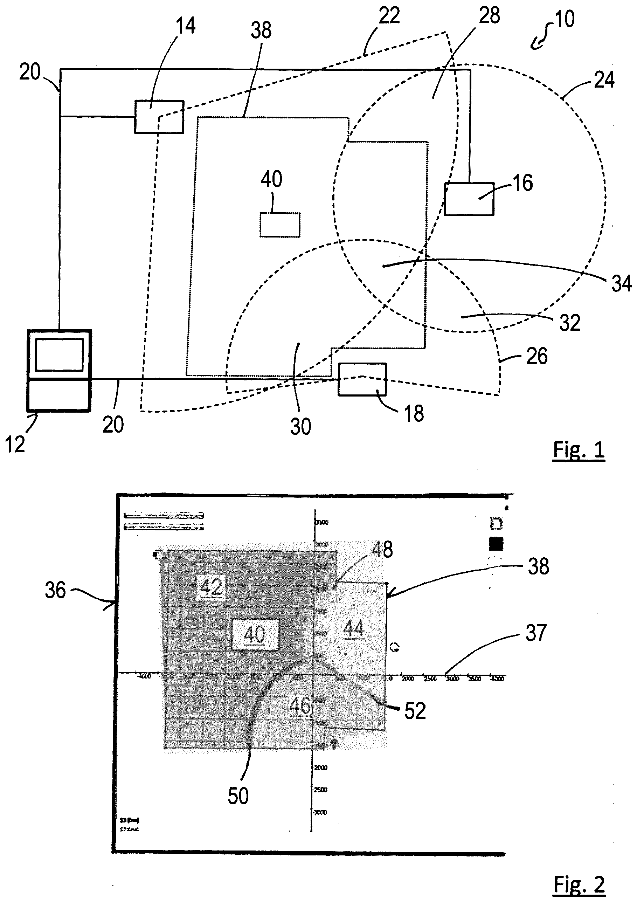

Fig. 1 zeigt ein System 10, welches einen Computer 12 aufweist, der mit drei Überwachungseinheiten gekoppelt ist. Die Überwachungseinheiten sind ein erster Laserscanner 14, ein zweiter Laserscanner 16 und ein dritter Laserscanner 18. Die Laserscanner 14, 16, 18 sind mit dem Computer 12 mittels eines Feldbusses 20 verbunden.

Der erste Laserscanner 14 tastet einen ersten Detektionsbereich 22, der zweite Laserscanner 16 einen zweiten Detektionsbereich 24 und der dritte Laserscanner 18 einen dritten Detektionsbereich 26 ab. Der erste Detektionsbereich 22 und der dritte Detektionsbereich 26 sind kreissegmentförmig ausgebildet, wobei der erste Detektionsbereich 22 einen Winkel von etwa 110° und der dritte Detektionsbereich 26 einen Winkel von etwa 195° überdeckt.

Der zweite Detektionsbereich 24 ist kreisförmig ausgebildet, dies bedeutet, der zweite Laserscanner 16 tastet seine Umgebung in einem Bereich von 360° ab.

Der erste Detektionsbereich 22 und der zweite Detektionsbereich 24 überschneiden sich bereichsweise und bilden auf diese Art einen ersten Überlappungsbereich 28. Ein zweiter Überlappungsbereich 30 ist durch den Bereich definiert, den sowohl der erste Detektionsbereich 22 als auch der dritte Detektionsbereich 26 abdecken. In einem dritten Überlappungsbereich 32 überschneiden sich der zweite Detektionsbereich 24 und der dritte Detektionsbereich 26. Ein vierter Überlappungsbereich 34 befindet sich dort, wo sich der erste, der zweite und der dritte Detektionsbereich 22, 24, 26 überschneiden.

In Fig. 2 ist eine graphische Benutzeroberfläche (GUI) 36 gezeigt, die von einer Software auf dem Computer 12 bereitgestellt wird. Die GUI 36 umfasst einen Maßstab 37, der die in der GUI 36 gezeigten Größen in Relation zu den tatsächlichen Größen setzt. In der GUI 36 ist ein gewünschtes Schutzfeld 38 manuell eingetragen worden.

Das gewünschte Schutzfeld 38 weist eine Form auf, die etwa zwei aneinander angrenzenden Rechtecken entspricht. Innerhalb des gewünschten Schutzfeldes 38 ist ein Cut-Out-Bereich 40 angeordnet, der nicht überwacht werden soll. Das gewünschte Schutzfeld 38 und der Cut-Out-Bereich 40 sind auch in Fig. 1 gezeigt.

Die Position und Ausrichtung der Laserscanner kann z.B. automatisch erfasst werden. Alternativ ist auch denkbar, dass die Position und Ausrichtung der Scanner durch den Benutzer manuell erfasst wird. Dazu ist es z.B. möglich, dass die Messdaten der Laserscanner auf der GUI eingeblendet werden. Der Benutzer kann dann die virtuellen Positionen der Scanner auf der GUI verschieben und gegebenenfalls verdrehen, bis sich deren Messdaten überdecken. Alternativ können die Positionen und Ausrichtungen der Laserscanner auch anhand von Referenzobjekten bestimmt oder verifiziert werden.

Die erfassten Positionen können dann als Grundlage für die anschließende automatische Feldzerlegung dienen.

Die Erfassung der Position der Laserscanner umfasst dabei auch die Erfassung deren Ausrichtung um "die Blickrichtung" des jeweiligen Scanners zu kennen bzw. um den 0°-Punkt des jeweiligen Scans zu kennen.

Nach der Eingabe des gewünschten Schutzfeldes 38 in die GUI 36 wird von der Software eine Berechnung der Teilfelder vorgenommen. Das Ergebnis der Berechnung ist in Fig. 2 gezeigt.

Gemäß Fig. 2 soll von dem ersten Laserscanner 14 ein erstes Teilfeld 42, von dem zweiten Laserscanner 16 ein zweites Teilfeld 44 und von dem dritten Laserscanner 18 ein drittes Teilfeld 46 überwacht werden. Die Teilfelder 42, 44, 46 sind derart eingeteilt, dass jeder Punkt des gewünschten Schutzfeldes 38 von demjenigen Laserscanner 14, 16, 18 überwacht wird, der für den jeweiligen Punkt die größte Messgenauigkeit aufweist.

Zwischen dem ersten Teilfeld 42 und dem zweiten Teilfeld 44 erstreckt sich ein erster Grenzbereich 48, welcher von dem ersten Laserscanner 14 und dem zweiten Laserscanner 16 überwacht wird. In entsprechender Weise befindet sich zwischen dem ersten Teilfeld 42 und dem dritten Teilfeld 46 ein zweiter Grenzbereich 50, der von dem ersten Laserscanner 14 und dem dritten Laserscanner 18 überwacht wird. Schließlich befindet sich ein dritter Grenzbereich 52 zwischen dem zweiten Teilfeld 44 und dem dritten Teilfeld 46. Der dritte Grenzbereich 52 wird von dem zweiten Laserscanner 16 und dem dritten Laserscanner 18 gleichzeitig überwacht.

Nach der Aufteilung der Teilfelder 42, 44, 46 durch die Software, wird mittels der Software eine entsprechende Konfiguration der Laserscanner 14, 16, 18 erstellt und über den Feldbus 20 (Fig. 1) an die Laserscanner 14, 16, 18 übermittelt. Nach dem Erhalt der Konfiguration definieren die Laserscanner 14, 16, 18 diejenigen Bereiche ihrer Detektionsbereiche 22, 24 26 als Schutzfelder, die den Teilfeldern 42, 44, 46 entsprechen. Innerhalb des ersten Teilfelds 42 ist dabei der Cut-Out-Bereich 40 nicht als Schutzfeld definiert. Sofern beispielsweise eine Person den als Schutzfeld definierten Bereich betritt, kann von dem entsprechenden Laserscanner 14, 16, 18 eine Warnmeldung ausgegeben werden, die beispielsweise zur Stilllegung von benachbarten Maschinen (nicht gezeigt) führen kann. Im Betrieb des Systems 10 tasten die Laserscanner 14, 16, 18 dabei nur ihr jeweiliges Teilfeld 42, 44, 46 (samt der jeweils dazugehörigen Grenzbereiche 48, 50, 52) ab. Außerhalb des jeweiligen Teilfelds 42, 44, 46 findet keine Abtastung statt, wodurch die von den Laserscannern 14, 16, 18 zu verarbeitende Datenmenge reduziert wird.

### Bezugszeichenliste

- 10: System
- 12: Computer
- 14: erster Laserscanner
- 16: zweiter Laserscanner
- 18: dritter Laserscanner
- 20: Feldbus
- 22: erster Detektionsbereich
- 24: zweiter Detektionsbereich
- 26: dritter Detektionsbereich
- 28: erster Überlappungsbereich
- 30: zweiter Überlappungsbereich
- 32: dritter Überlappungsbereich
- 34: vierter Überlappungsbereich
- 36: Graphische Benutzeroberfläche (GUI)
- 37: Maßstab
- 38: gewünschtes Schutzfeld
- 40: Cut-Out-Bereich
- 42: erstes Teilfeld
- 44: zweites Teilfeld
- 46: drittes Teilfeld
- 48: erster Grenzbereich
- 50: zweiter Grenzbereich
- 52: dritter Grenzbereich

## Patentansprüche

1. Verfahren zum Einstellen von mehreren Teilbereichen (42, 44, 46) eines gewünschten Schutzbereiches (38), bei welchem
a) die Positionen einer Mehrzahl von Überwachungseinheiten (14, 16, 18), bevorzugt von Laserscannern, erfasst werden, wobei jede Überwachungseinheit (14, 16, 18) einen Detektionsbereich (22, 24, 26) erfasst,
b) eine maximale Größe jedes Detektionsbereichs (22, 24, 26) ermittelt wird,
c) der gewünschte Schutzbereich (38) in einer graphischen Benutzeroberfläche (36) festgelegt wird,
d) anhand der Positionen der Überwachungseinheiten (14, 16, 18), der maximalen Größe der Detektionsbereiche (22, 24, 26) und des gewünschten Schutzbereiches (38) die von den jeweiligen Überwachungseinheiten (14, 16, 18) zu überwachenden Teilbereiche (42, 44, 46) von einer Software festgelegt werden und
e) die Teilbereiche (42, 44, 46) den jeweiligen Überwachungseinheiten (14, 16, 18) zugewiesen werden,
**dadurch gekennzeichnet, dass**
für Überlappungsbereiche (14, 16, 18) des Schutzbereiches (38), welche von mehreren Überwachungseinheiten (14, 16, 18) überwachbar sind, die Teilbereiche (42, 44, 46) zumindest teilweise so festgelegt werden, dass jeweils nur genau diejenige Überwachungseinheit (14, 16, 18) den Überlappungsbereich (28, 30, 32, 34) überwacht, die dem jeweiligen Überlappungsbereich (28, 30, 32, 34) am nächsten ist.

2. Verfahren nach Anspruch 1,
**dadurch gekennzeichnet, dass**
auch eine Ausrichtung der Überwachungseinheiten (14, 16, 18) erfasst wird.

3. Verfahren nach Anspruch 1 oder 2,
**dadurch gekennzeichnet, dass**
für Überlappungsbereiche (28, 30, 32, 34) des Schutzbereiches (38), welche von mehreren Überwachungseinheiten (14, 16, 18) überwachbar sind, die Teilbereiche (42, 44, 46) zumindest teilweise so festgelegt werden, dass jeweils nur genau eine Überwachungseinheit (14, 16, 18) den jeweiligen Überlappungsbereich (28, 30, 32, 34) überwacht.

4. Verfahren nach zumindest einem der vorstehenden Ansprüche,
**dadurch gekennzeichnet, dass**
für Grenzen zwischen zwei Teilbereichen (42, 44, 46) Grenzbereiche (48, 50, 52) mit einer vorbestimmten Breite festgelegt werden, die jeweils beiden Teilbereichen (42, 44, 46) zugeordnet werden.

5. Verfahren nach zumindest einem der vorstehenden Ansprüche,
**dadurch gekennzeichnet, dass**
für Überlappungsbereiche (28, 30, 32, 34) des Schutzbereiches (38), welche von mehreren Überwachungseinheiten (14, 16, 18) überwachbar sind, die Teilbereiche (42, 44, 46) zumindest teilweise so festgelegt werden, dass jeweils nur genau diejenige Überwachungseinheit (14, 16, 18) den Überlappungsbereich (28, 30, 32, 34) überwacht, die bezüglich der Größe ihres Detektionsbereichs (22, 24, 26) dem jeweiligen Überlappungsbereich (28, 30, 32, 34) am nächsten ist.

6. Verfahren nach zumindest einem der vorstehenden Ansprüche,
**dadurch gekennzeichnet, dass**
f) die Überwachungseinheiten (14, 16, 18) eingestellt werden, nur den jeweils zugewiesenen Teilbereich (42, 44, 46) zu überwachen.

7. Verfahren nach zumindest einem der vorstehenden Ansprüche,
**dadurch gekennzeichnet, dass**
der gewünschte Schutzbereich (38) mehrere voneinander getrennte Schutzbereichsabschnitte umfasst, und/oder
der gewünschte Schutzbereich (38) nicht-zu-überwachende Bereiche (40) innerhalb des Schutzbereiches (38) aufweist.

8. Verfahren nach zumindest einem der vorstehenden Ansprüche,
**dadurch gekennzeichnet, dass**
eine Ausgabe nicht-überwachbarer Bereiche des gewünschten Schutzbereiches (38) erfolgt.

9. Verfahren nach zumindest einem der vorstehenden Ansprüche,
**dadurch gekennzeichnet, dass**
auch Konturbereiche innerhalb des gewünschten Schutzbereichs (38) ermittelt werden und bei der Festlegung der Teilbereiche (42, 44, 46) berücksichtigt werden.

10. Verfahren nach zumindest einem der vorstehenden Ansprüche,
**dadurch gekennzeichnet, dass**
die Positionen der Überwachungseinheiten (14, 16, 18) mittels eines Referenzobjekts ermittelt werden.

11. Verfahren nach zumindest einem der vorstehenden Ansprüche,
**dadurch gekennzeichnet, dass**
die festgelegten Teilbereiche (42, 44, 46) und/oder der gewünschte Schutzbereich (38) mittels einer Software anzeigbar und/oder veränderbar sind.

12. Verfahren nach Anspruch 11,
**dadurch gekennzeichnet, dass**
die Software den angezeigten Teilbereichen (42, 44, 46) und/oder dem gewünschten Schutzbereich (38) einen Lageplan hinterlegt.

13. System mit einer Recheneinrichtung und zumindest zwei Überwachungseinheiten (14, 16, 18), wobei die Recheneinrichtung und die Überwachungseinheiten (14, 16, 18) mittels einer Datenverbindung (20) gekoppelt sind und das System ausgebildet ist, ein Verfahren nach wenigstens einem der Ansprüche 1 bis 13 durchzuführen.

14. Computerprogramm mit Programmcode-Mitteln, die derart eingerichtet sind, dass ein Verfahren nach wenigstens einem der Ansprüche 1 bis 13 durchgeführt wird, wenn das Programm auf einem Computer ausgeführt wird.

## Claims

1. A method of setting a plurality of part regions (42, 44, 46) of a desired protected zone (38), in which
a) the positions of a plurality of monitoring units (14, 16, 18), preferably laser scanners, are detected, wherein each monitoring unit (14, 16, 18) detects a detection zone (22, 24, 26);
b) a maximum size of each detection zone (22, 24, 26) is determined;
c) the desired protected zone (38) is fixed in a graphical user interface (36);
d) the part regions (42, 44, 46) to be monitored by the respective monitoring units (14, 16, 18) are fixed by a piece of software with reference to the positions of the monitoring units (14, 16, 18), to the maximum size of the detection zones (22, 24, 26) and to the desired protected zone (38); and
e) the part regions (42, 44, 46) are assigned to the respective monitoring units (14, 16, 18),
**characterized in that**
the part regions (42, 44, 46) are fixed at least in part for overlap regions (14, 16, 18) of the protected zone (38) which are monitorable by a plurality of monitoring units (14, 16, 18) such that only exactly that respective monitoring unit (14, 16, 18) monitors the overlap region (28, 30, 32, 34) which is closest to the respective overlap region (28, 30, 32, 34).

2. A method in accordance with claim 1,
**characterized in that**
an alignment of the monitoring units (14, 16, 18) is also detected.

3. A method in accordance with claim 1 or claim 2,
**characterized in that**
the part regions (42, 44, 46) are fixed at least in part for overlap regions (28, 30, 32, 34) of the protected zone (38) which are monitorable by a plurality of monitoring units (14, 16, 18) such that only exactly one respective monitoring unit (14, 16, 18) monitors the respective overlap region (28, 30, 32, 34).

4. A method in accordance with at least one of the preceding claims,
**characterized in that**
boundary regions (48, 50, 52) having a predefined width are fixed for boundaries between two part regions (42, 44, 46) and are each associated with the two part regions (42, 44, 46).

5. A method in accordance with at least one of the preceding claims,
**characterized in that**
the part regions (42, 44, 46) are fixed at least in part for overlap regions (28, 30, 32, 34) of the protected zone (38) which are monitorable by a plurality of monitoring units (14, 16, 18) such that only exactly that respective monitoring unit (14, 16, 18) monitors the overlap region (28, 30, 32, 34) which is closest to the respective overlap region (28, 30, 32, 34) with respect to the size of its detection zone (22, 24, 26).

6. A method in accordance with at least one of the preceding claims,
**characterized in that**
f) the monitoring units (14, 16, 18) are set only to monitor the respective assigned part region (42, 44, 46).

7. A method in accordance with at least one of the preceding claims,
**characterized in that**
the desired protected zone (38) comprises a plurality of mutually separate protected zone sections; and/or
**in that** the desired protected zone (38) has regions (40) not to be monitored within the protected zone (38).

8. A method in accordance with at least one of the preceding claims,
**characterized in that**
an output of non-monitorable regions of the desired protected zone (38) takes place.

9. A method in accordance with at least one of the preceding claims,
**characterized in that**
contour regions within the desired protected zone (38) are also determined and are taken into account in the fixing of the part regions (42, 44, 46).

10. A method in accordance with at least one of the preceding claims,
**characterized in that**
the positions of the monitoring units (14, 16, 18) are determined by means of a reference object.

11. A method in accordance with at least one of the preceding claims,
**characterized in that**
the fixed part regions (42, 44, 46) and/or the desired protected zone (38) can be displayed and/or changed by means of a piece of software.

12. A method in accordance with claim 11,
**characterized in that**
the software places a site plan behind the displayed part regions (42, 44, 46) and/or the desired protected zone (38).

13. A system having a processing unit and at least two monitoring units (14, 16, 18), wherein the processing unit and the monitoring units (14, 16, 18) are coupled by means of a data connection (20) and the system is configured to carry out a method in accordance with at least one of the claims 1 to 13.

14. A computer program having program code means which are adapted such that a method in accordance with at least one of the claims 1 to 13 is carried out when the program is executed on a computer.

## Revendications

1. Procédé de configuration de plusieurs zones partielles (42, 44, 46) d'une zone de protection souhaitée (38), dans lequel
a) on détecte les positions d'une pluralité d'unités de surveillance (14, 16, 18), de préférence de scanneurs lasers, chaque unité de surveillance (14, 16, 18) comprenant une zone de détection (22, 24, 26),
b) on détermine une taille maximale de chaque zone de détection (22, 24, 26),
c) on fixe la zone de protection souhaitée (38) dans une interface graphique utilisateur (36),
d) en se basant sur les positions des unités de surveillance (14, 16, 18), sur la taille maximale des zones de détection (22, 24, 26) et sur la zone de protection souhaitée (38), on fixe par un logiciel les zones partielles (42, 44, 46) à surveiller par les unités de surveillance respectives (14, 16, 18), et
e) on associe les zones partielles (42, 44, 46) aux unités de surveillance respectives (14, 16, 18),
**caractérisé en ce que**
pour des zones de chevauchement (14, 16, 18) de la zone de protection (38), qui sont susceptibles d'être surveillées par plusieurs unités de surveillance (14, 16, 18), on fixe les zones partielles (42, 44, 46) au moins partiellement de telle sorte que précisément cette unité de surveillance (14, 16, 18) respective surveille la zone de chevauchement (28, 30, 32, 34), qui est la plus proche de la zone de chevauchement respective (28, 30, 32, 34).

2. Procédé selon la revendication 1,
**caractérisé en ce que**
on détecte également une orientation des unités de surveillance (14, 16, 18).

3. Procédé selon la revendication 1 ou 2,
**caractérisé en ce que**
pour des zones de chevauchement (28, 30, 32, 34) de la zone de protection (38) qui sont susceptibles d'être surveillées par plusieurs unités de surveillance (14, 16, 18), on fixe les zones partielles (42, 44, 46) au moins partiellement de telle sorte que précisément une seule unité de surveillance (14, 16, 18) surveille la zone de chevauchement respective (28, 30, 32, 34).

4. Procédé selon l'une au moins des revendications précédentes,
**caractérisé en ce que**
pour des limites entre deux zones partielles (42, 44, 46), on fixe des zones limites (48, 50, 52) d'une largeur prédéterminée, qui sont associées aux deux zones partielles respectives (42, 44, 46).

5. Procédé selon l'une au moins des revendications précédentes,
**caractérisé en ce que**
pour des zones de chevauchement (28, 30, 32, 34) de la zone de protection (38) qui sont susceptibles d'être surveillées par plusieurs unités de surveillance (14, 16, 18), on fixe les zones partielles (42, 44, 46) au moins partiellement de telle sorte que précisément cette unité de surveillance (14, 16, 18) surveille la zone de chevauchement (28, 30, 32, 34), qui est la plus proche de la zone de chevauchement (28, 30, 32, 34) en ce qui concerne la taille de la zone de détection (22, 24, 26).

6. Procédé selon l'une au moins des revendications précédentes,
**caractérisé en ce que**
f) les unités de surveillance (14, 16, 18) sont configurées pour surveiller uniquement la zone partielle respective associée (42, 44, 46).

7. Procédé selon l'une au moins des revendications précédentes,
**caractérisé en ce que**
la zone de protection souhaitée (38) comprend plusieurs portions de zone de protection séparées les unes des autres, et/ou la zone de protection souhaitée (38) comprend des zones non pas à surveiller (40) à l'intérieur de la zone de protection (38).

8. Procédé selon l'une au moins des revendications précédentes,
**caractérisé en ce que**
il se produit une émission de zones non à surveiller de la zone de protection souhaitée (38).

9. Procédé selon l'une au moins des revendications précédentes,
**caractérisé en ce que**
on détecte également des zones de contour à l'intérieur de la zone de protection souhaitée (38) et on les prend en compte lors de la fixation des zones partielles (42, 44, 46).

10. Procédé selon l'une au moins des revendications précédentes,
**caractérisé en ce que**
on détermine les positions des unités de surveillance (14, 16, 18) au moyen d'un objet de référence.

11. Procédé selon l'une au moins des revendications précédentes,
**caractérisé en ce que**
les zones partielles fixées (42, 44, 46) et/ou la zone de protection souhaitée (38) peuvent être affichées et/ou modifiées au moyen d'un logiciel.

12. Procédé selon la revendication 11,
**caractérisé en ce que**
le logiciel soumet un schéma du site aux zones partielles affichées (42, 44, 46) et/ou à la zone de protection souhaitée (38).

13. Système comportant un moyen de calcul et au moins deux unités de surveillance (14, 16, 18), dans lequel le moyen de calcul et les unités de surveillance (14, 16, 18) sont couplés au moyen d'une connexion de données (20) et le système est conçu pour mettre en oeuvre un procédé selon l'une des revendications 1 à 13.

14. Programme informatique comportant des moyens de code de programme qui sont conçus de manière à mettre en oeuvre un procédé selon l'une au moins des revendications 1 à 13 lorsque le programme est exécuté sur un ordinateur.
